# EUROPÄISCHE PATENTSCHRIFT

(11) **EP 1 266 790 B1**
(45) Veröffentlichungstag und Bekanntmachung des Hinweises auf die Patenterteilung: **19.10.2005**
(21) Anmeldenummer: 02009525.3
(22) Anmeldetag: 26.04.2002
(51) Int. Cl.: B60N 2/24, B60N 2/70

(54) **Fahrgastsitz für ein Personenbeförderungsfahrzeug**
Passenger seat for public transport vehicles
Siège de passager pour véhicules de transport en commun

(30) Priorität: 12.06.2001 DE 10128338
(43) Veröffentlichungstag der Anmeldung: 18.12.2002
(73) Patentinhaber: GRAMMER AG, 92224 Amberg (DE)
(72) Erfinder: Schneider, Franz, 92318 Neumarkt (DE); Zeitler, Herbert, 92249 Vilseck (DE)
(74) Vertreter: Ostriga, Sonnet, Wirths & Roche

(56) Entgegenhaltungen:
- EP-A- 0 568 714
- BE-A- 520 799
- DE-A- 2 751 110
- DE-A- 19 745 491
- DE-U- 29 507 216
- FR-A- 2 698 832
- US-A- 3 797 887

## Beschreibung

Die Erfindung betrifft einen Fahrgastsitz für ein Personenbeförderungsfahrzug entsprechend dem Oberbegriff des Anspruchs 1. Ein solcher Fahrgastsitz ist in der DE 27 51 110 A beschrieben.

Bei dem Sitzteilrahmen des bekannten Fahrgastsitzes gehen Lehnenschenkel und Sitzschenkel jeweils ineinander über. Oben sind die beiden Lehnenschenkel mittels eines Querprofils miteinander verbunden. Die Sitzrahmenschenkel sind auf einem fahrzeugseitig befestigbaren Unterbau gehalten. In dem Zwischenraum zwischen den beiden Lehnenschenkeln ist eine Rückenschale und in dem Zwischenraum zwischen den beiden Sitzschenkeln ist eine Sitzschale befestigt. Die Rückenschale bildet ein Tragteil für ein Lehnenpolster, während die Sitzschale ein Tragteil für ein Sitzpolster darstellt. Lehnenschenkel und Sitzschenkel sind derart ausgebildet, dass sie die Polster seitlich umfassen.

Bei dem von der DE 2 751 110 A bekannten Fahrgastsitz bilden Rückenschale und Sitzschale jeweils einen mit seiner Troghohlfläche zur Polsterseite hin offenen Trog, welcher von der Polsterseite her in den Zwischenraum jeweils zwischen zwei korrespondierenden Schenkeln eingreift, welcher sich mit den Außenflächen seiner vom Trogboden ausgehenden beiden Trogwände an den beiden zueinander weisenden Innenseiten zweier korrespondierender Schenkel seitlich abstützt und welcher von zwei sich außen an je eine Trogwand anschließenden Stützflanschen eingefasst ist, die sich mit ihren von der Polsterseite abgewandten Flanschaußenflächen jeweils auf einem Schenkel abstützen, und wobei jede Troghohlfläche unter Einbeziehung ihrer beiden Flanschinnenflächen die Polsterinnenfläche des zugehörigen Polsters hintergreift.

Dabei bilden Rückenschale und Sitzschale trogartige Bauteile. Diese trogartigen Bauteile können aus jedem geeigneten Werkstoff gefertigt sein, beispielsweise also Press- oder Gussteile aus Metall oder Gussteile aus Kunststoff sein.

Ein solches trogartiges Bauteil stützt sich mit den Außenflächen seiner beiden Trogwände zwischen den jeweils korrespondierenden beiden Schenkeln, Lehnenschenkel oder Sitzschenkel, selbständig zentriert ab und nimmt so eine sichere Lage gegen seitliche Verschiebungskräfte ein.

Zugleich liegen bei dem von der DE 2 751 110 A bekannten Fahrgastsitz die von den trogartigen Schalen gebildeten Stützflansche in hauptsächlicher Lastrichtung vorn auf den Lehnenschenkeln an oder oben auf den Sitzschenkeln auf. So bedarf es praktisch im wesentlichen nur einer zusätzlichen Befestigung im Sinne einer Lagesicherung von Rückenschale und Sitzschale, wodurch ein Abheben der beiden Schalen vom Sitzteilrahmen verhindert wird.

Da die Mittel zur seitlichen Zentrierung und zur Abstützung jeweils in hauptsächlicher Lastrichtung überwiegend von den trogartigen Schalenbauteilen gebildet sind, die Schenkel demnach nur Widerlagerflächen zu bilden brauchen, brauchen die Schenkel selbst nur eine einfache Bauform aufzuweisen, z.B. jeweils ein Rohr mit kreisförmigem Querschnitt zu bilden.

Dadurch, dass gemäß der DE 27 51 10 A jede Troghohlfläche unter Einbeziehung ihrer beiden Flanschinnenflächen die Polsterinnenfläche des zugehörigen Polsters gänzlich hintergreift, nutzt der bekannte Fahrgastsitz die verfügbare Sitzbreite vollkommen aus.

Außerdem werden dadurch optisch unschöne Spalten zwischen den Polstern und den seitlichen Einfassungen vermieden. Schließlich sind die Schenkel des bekannten Fahrgastsitzes so weit von der Anlehn- und von der Sitzzone zurückverlegt und vom zugehörigen Polster überdeckt, dass zugleich ein erheblicher Sitzkomfort erzielt wird.

Der Fahrgastsitz gemäß der DE 27 51 110 A verfügt insbesondere über eine optimale nutzbare Sitzbreite, über einen besseren Komfort, über ein besseres Aussehen und außerdem über eine einfache Bauweise.

Ausgehend von dem bekannten Fahrgastsitz gemäß der DE 27 51 110 A, liegt der Erfindung die Aufgabe zugrunde, die Crashbelastung des bekannten Fahrgastsitzes zu verbessern.

Gemeinsam mit den Merkmalen des Oberbegriffs des Anspruchs 1 wird diese Aufgabe mit dessen kennzeichnenden Merkmalen dadurch gelöst, dass Rückenschale und/oder Sitzschale im Übergang zwischen der jeweiligen Trogwand und dem Stützflansch eine zum Polster hin vorstehende Hohlrippe aufweisen, die einen zum benachbarten Schenkel hin offenen Kanal bildet.

Mit dieser erfindungsgemäßen Hohlrippe wird unmittelbar in der Befestigungszone von Rückenschale und/oder Sitzschale eine erhebliche Versteifung des Schalenbauteils erzielt, während der sich zwischen den beiden Hohlrippen erstreckende hauptsächliche Flächenanteil weniger starr ausgebildet sein kann. Dadurch wird erreicht, dass die Schalen im Falle einer Crashbelastung in ihrer Befestigungszone weitestgehend formstabil sind, während der mittlere Flächenbereich, z.B. der mittlere Flächenbereich der Rückenschale bei einem Aufprall im Kniebereich, hinreichend verformbar ist.

Weitere Vorteile entsprechend der Erfindung sind zusätzlichen Unteransprüchen zu entnehmen.

In den Zeichnungen ist ein bevorzugtes Ausführungsbeispiel entsprechend der Erfindung dargestellt, es zeigt
Fig. 1 eine zwei Sitzteile aufweisende Fahrgastsitzgruppe für ein Nahverkehrsfahrzeug, wie z.B. für einen Straßen- oder S-Bahnwagen,
Fig. 2 die Sitzgruppe gemäß Fig. 1 in Ansicht entsprechend dem in Fig. 1 mit II gekennzeichneten Sichtpfeil,
Fig. 3 eine auseinandergezogene räumliche Darstellung zur Verdeutlichung des konstruktiven Aufbaus der in den Fig. 1 und 2 dargestellten Sitzgruppe,
Fig. 4 einen Horizontalschnitt durch die Lehne eines Fahrgastsitzes etwa entsprechend der in Fig. 2 mit IV-IV bezeichneten Schnittlinie,
Fig. 5A eine Rückenschale in Seitenansicht,
Fig. 5B die Rückenschale in der Vorderansicht gemäß dem in Fig. 5A mit 5B bezeichneten Sichtpfeil,
Fig. 5C die Rückenschale in räumlicher Darstellungsweise in einer rückwärtigen Ansicht etwa entsprechend dem in Fig. 5A mit VC bezeichneten Sichtpfeil,

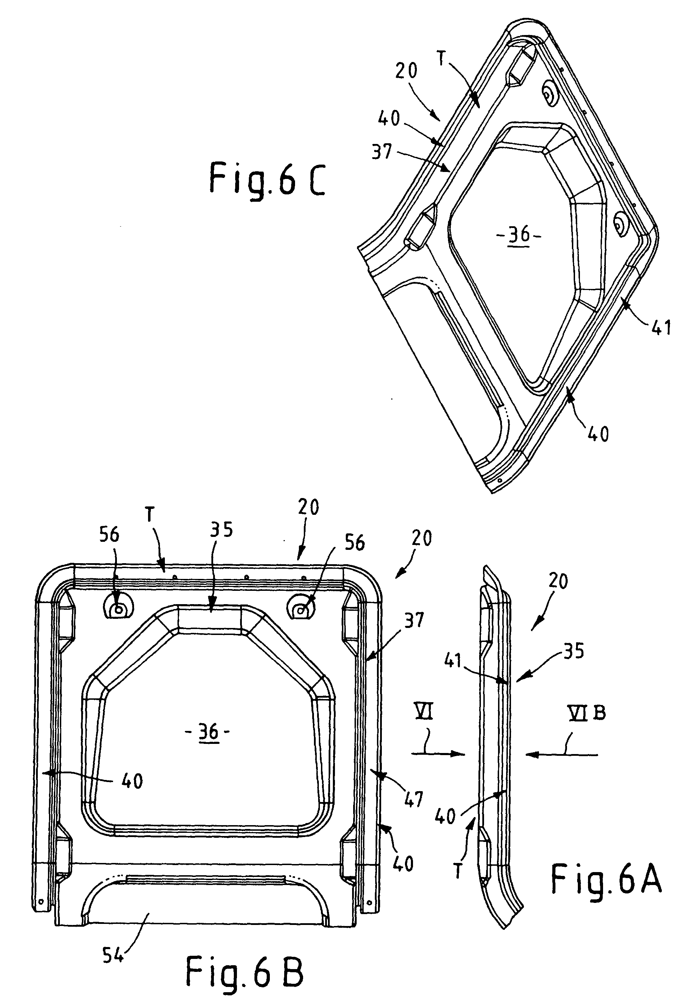

Fig. 6A eine Sitzschale in Seitenansicht,
Fig. 6B die Oberseite der Sitzschale entsprechend dem in Fig. 6A mit VIB bezeichneten Sichtpfeil,
Fig. 6C in räumlicher Darstellung die Unterseite der Sitzschale entsprechend dem in Fig. 6A mit VIC bezeichneten Sichtpfeil,

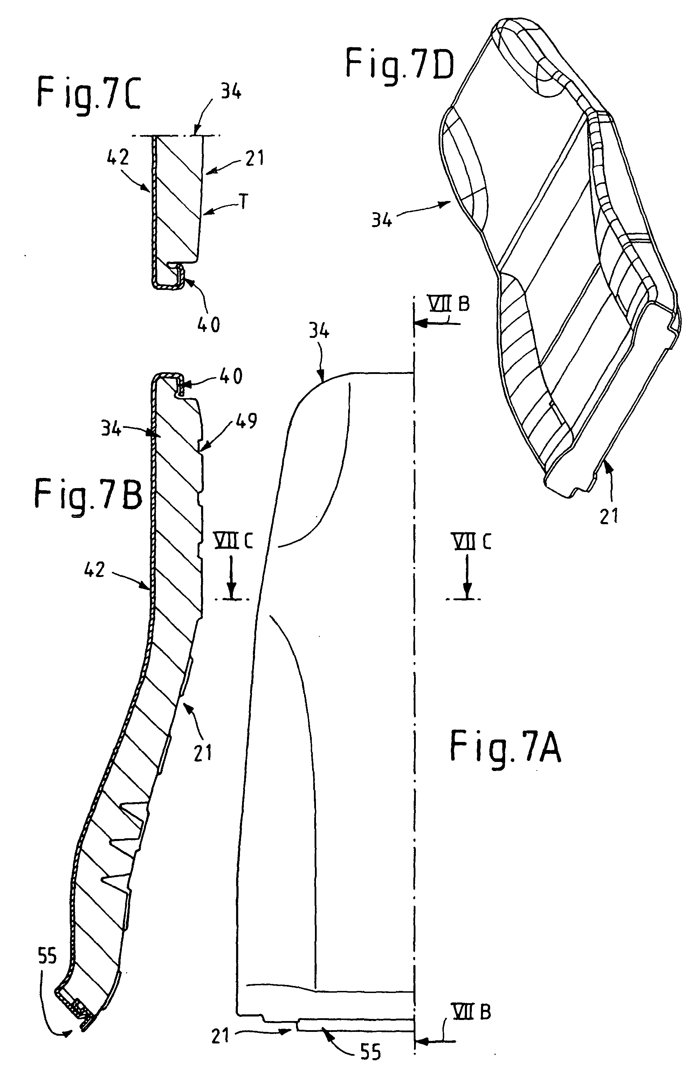

Fig. 7A eine hälftige Vorderansicht der Rückenschale mit eingesetztem Lehnenpolster,
Fig. 7B einen Längsschnitt durch die in Fig. 7A dargestellte Rückenschale entsprechend der dort mit VIIB-VIIB bezeichneten Schnittlinie,
Fig. 7C einen Querschnitt entsprechend der in Fig. 7A mit VIIC-VIIC bezeichneten Schnittlinie,
Fig. 7D eine räumliche Darstellung der Rückenschale mit eingesetzten Rückenpolster,

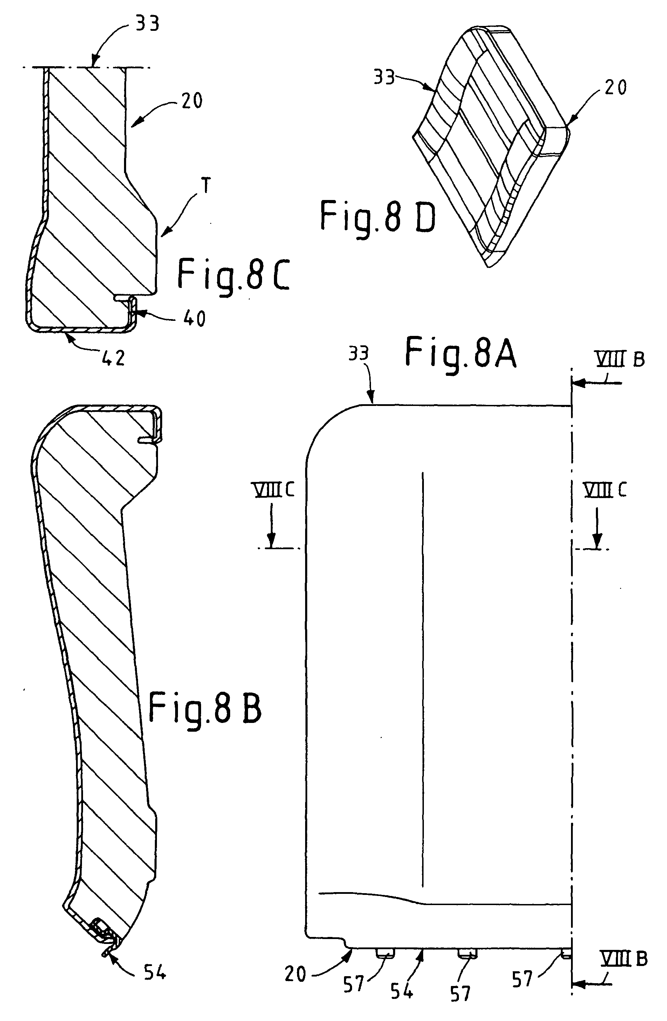

Fig. 8A die Draufsicht auf eine Sitzschale mit eingesetztem Sitzpolster,
Fig. 8B einen Längsschnitt entsprechend der in Fig. 8A mit VIIIB-VIIIB bezeichneten Schnittlinie,
Fig. 8C einen Horizontalschnitt entsprechend der in Fig. 8A mit VIIIC-VIIIC bezeichneten Schnittlinie und
Fig. 9 einen Querschnitt durch einen Bügelsteg mit einem Befestigungshaken für einen oberen Bereich der Rückenschale.

Ein als Doppelsitz ausgebildeter Fahrgastsitz 10, der z.B. für einen Nahschnellverkehrszug bestimmt ist, weist einen fahrzeugseitig befestigbaren Unterbau 11 und zwei auf dem Unterbau 11 befestigte, mit einer Polsterung versehene, Sitzteile 12 auf.

Der Unterbau 11 besitzt einen im wesentlichen horizontal zu positionierenden Tragrahmen 13 von etwa rechteckiger Grundform, der aus zwei Vierkantrohr-Trägern 14 und aus zwei letztere miteinander verbindenden Streben 15, 16 zusammengesetzt ist.

Der Unterbau 11 verfügt zudem über einen zwei Stützen 17 aufweisenden Stützfuß 18 zur einseitigen Befestigung des Fahrgastsitzes 10 auf dem nicht dargestellten Fahrzeugboden. An der anderen Seite des Fahrgastsitzes 10 dient ein Stützflansch 19 der Strebe 15 der Befestigung des Unterbaus 11 auf einer nicht gezeigten fahrzeugseitigen Befestigungsstruktur.

Jedes Sitzteil 12 ist mit einer Sitzschale 20 und mit einer Rückenschale 21 versehen. Die Sitzschale 20 ist an einem Sitzrahmen 23 befestigt, welcher praktisch nur aus zwei voneinander distanzierten seitlichen rohrförmigen Sitzschenkeln 24 besteht, die mittels Befestigungslaschen 25 mit den beiden Vierkant-Rohrträgern 14 des Unterbaus 11 verschraubt sind.

Die Rückenschale 21 wird jeweils an einem U-bügelförmigen Lehnenrahmen 26 befestigt, der einen Bügelsteg 27 und zwei vom Bügelsteg 27 nach unten zum Sitzrahmen 23 hin weisende rohrförmige Lehnenschenkel 28 aufweist, deren untere Schenkelbereiche jeweils mit 29 bezeichnet sind.

Sitzrahmen 23 und Lehnenrahmen 26 bilden zusammen den Sitzteilrahmen 22.

Jedes innere Rohrende 30 der Sitzschenkel 24 ist mittels eines Übergangsrohrbogens 31 mit dem Rohrende 32 des jeweils zugehörigen unteren Schenkelbereichs 29 stoffschlüssig verbunden.

Die beiden Sitzschenkel 24, die beiden Übergangsrohrbögen 31, die beiden Lehnenschenkel 28 und der Bügelsteg 27 sind gemeinsam aus einem zusammenhängenden Rohr R gebogen, welches einen einheitlichen kreisförmigen Rohrquerschnitt aufweist.

Obwohl die Erfindung einen kreisförmigen Querschnitt bevorzugt sollen andere Rohrquerschnitte, wie z.B. Oval- oder Rechteckprofile, nicht ausgeschlossen sein, wenn besondere Anwendungsfälle dieses erfordern.

Die Sitzschale 20 trägt ein Sitzpolster 33 und die Rückenschale 21 ein Lehnenpolster 34.

Sitzschale 20 mit Sitzpolster 33 und Rückenschale 21 mit Lehnenpolster 34 sind - von der grundsätzlichen Funktionsweise betrachtet - analog aufgebaut, so dass es im vorliegenden Falle genügt, die Funktionsweise der Rückenschale 21 mit dem Lehnenpolster 34 im Zusammenwirken mit den Lehnenschenkeln 28 zu erklären.

Sitzschale 20 und Rückenschale 21 bestehen beim gezeigten Ausführungsbeispiel aus rostfreiem Stahlblech, bilden also Pressbauteile. Grundsätzlich lassen sich auch andere Fertigungsweisen, wie z.B. Kunststoffspritzgießen, bei der Herstellung der Sitzschale 20 oder der Rückenschale 21 verwirklichen.

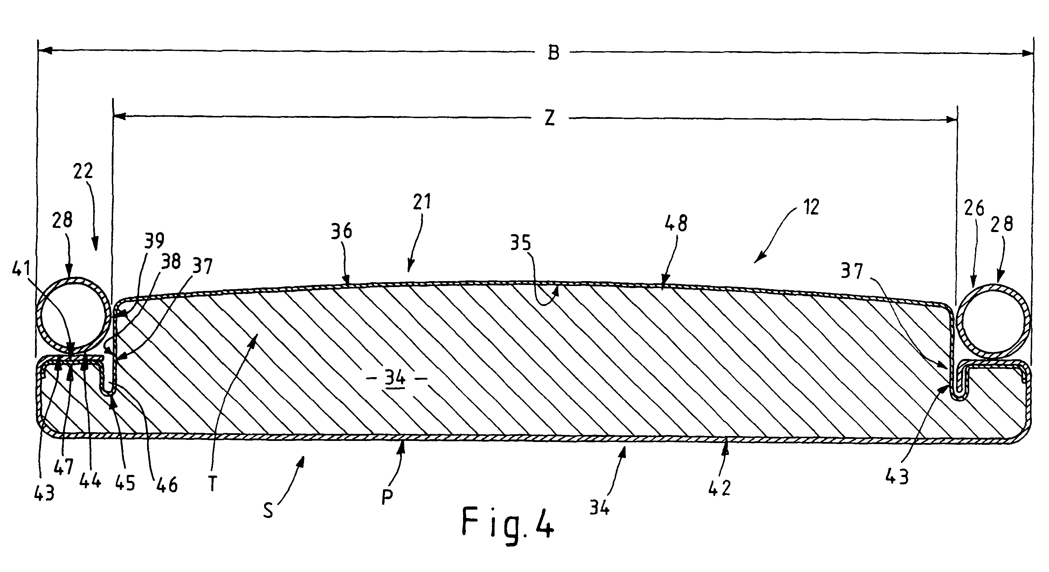

Aus Fig. 4 ist eine Rückenschale 21 zu ersehen, welche einen mit seiner Troghohlfläche 35 zum Lehnenpolster 34, also zur Polsterseite P hin, offenen Trog T bildet.

Dieser Trog T greift von der Polsterseite P her in einen Zwischenraum Z ein, welcher zwischen den beiden korrespondierenden Lehnenschenkeln 28 gebildet ist. Beidseitig des Trogbodens 36 ragt je eine Trogwand 37 zur Polsterseite P hin der insgesamt mit S bezeichneten Sitzlehne nach vorn. Beide Trogwände 37 stützen sich mit ihren Außenflächen 38 an den Innenseiten 39 der beiden Lehnenschenkel 28 seitlich ab.

Seitlich ist der Trog T von zwei außen an je eine Trogwand 37 angeschlossenen Stützflanschen 40 eingefasst. Jeder Stützflansch 40 stützt sich mit seiner von der Polsterseite P abgewandten Flanschaußenfläche 41 unter Zwischenschaltung eines Randbereichs 43 des Bezugstoffes 42 an der Vorderseite 44 des jeweiligen Lehnenschenkels 28 ab.

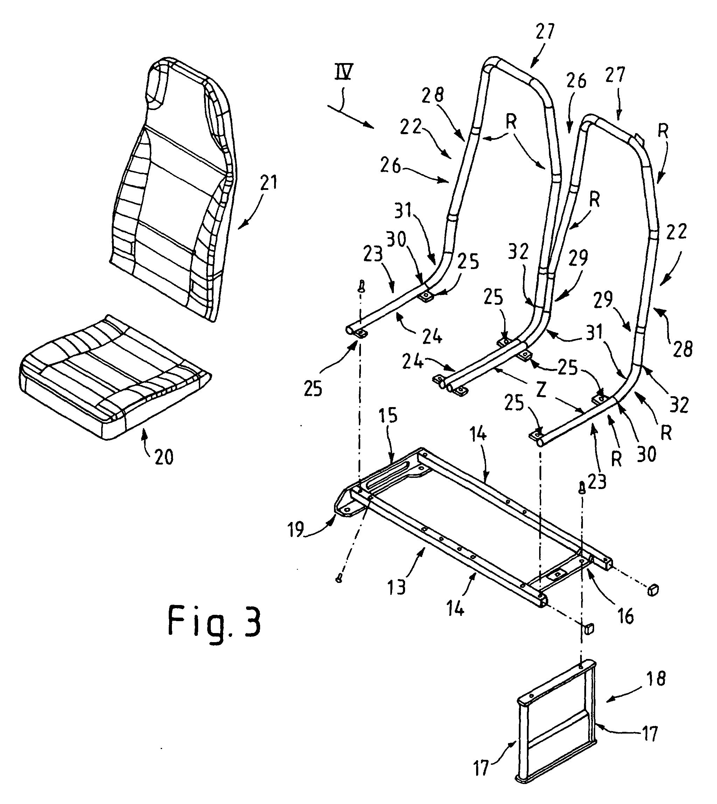

Wie bereits erwähnt, ist die Baugruppe Sitzschale 20/Sitzpolster 33 in ihrer Zuordnung zu den Sitzschenkeln 24 analog zu der in Fig. 4 dargestellten Anordnung aufgebaut. Allerdings muss man sich vorstellen, dass die Sitzschale 20 mit dem Trogboden 36 ihres Troges T von oben her in einen dem Zwischenraum Z analogen Zwischenraum zwischen den beiden Sitzschenkeln 24 (vgl. Fig. 3) eingreift.

Die Rückenschale 21 gemäß Fig. 4 bildet zwischen der jeweiligen Trogwand 37 und dem Stützflansch 40 eine zum Lehnenpolster 34 hin vorstehende Hohlrippe 45, welche jeweils einen zum benachbarten Lehnenschenkel 28 hin offenen Kanal 46 bildet. Dieser von der Hohlrippe 45 gebildete offene Kanal 46 kann der Aufnahme eines Teils eines Randbereichs 43 des Bezugsstoffs 42 dienen, wie rechts in Fig. 4 dargestellt.

Aus Fig. 4 wird besonders deutlich, dass die Troghohlfläche 35 unter Einbeziehung ihrer beiden Flanschinnenflächen 47 die gesamte Polsterinnenfläche 48 bis zu deren äußersten Rändern hin hintergreift. Auf diese Weise wird die zur Verfügung stehende Sitzbreite B vom Lehnenpolster 34 voll ausgenutzt. Dabei sind die Lehnenschenkel 28 von der Polsterseite P her nicht sichtbar und beeinträchtigen im übrigen den Komfort beim Anlehnen an die Polsterseite P in keiner Weise, da beide Lehnenschenkel 28 vom Polster 34 hinreichend überdeckt sind.

Aus den nachfolgenden Figuren sind insbesondere Einzelheiten der Rückenschale 21, der Sitzschale 20, des zugehörigen Lehnenpolsters 34 sowie des zugehörigen Sitzpolsters 33 zu ersehen. Die dargestellten Bauteile selbst oder Bereiche der dargestellten Bauteile sind, wenn sie analoge Funktionen betreffen, mit denselben Bezugszeichen versehen.

Sitzschale 20 und Rückenschale 21 bestehen jeweils aus rostfreiem Stahlblech.

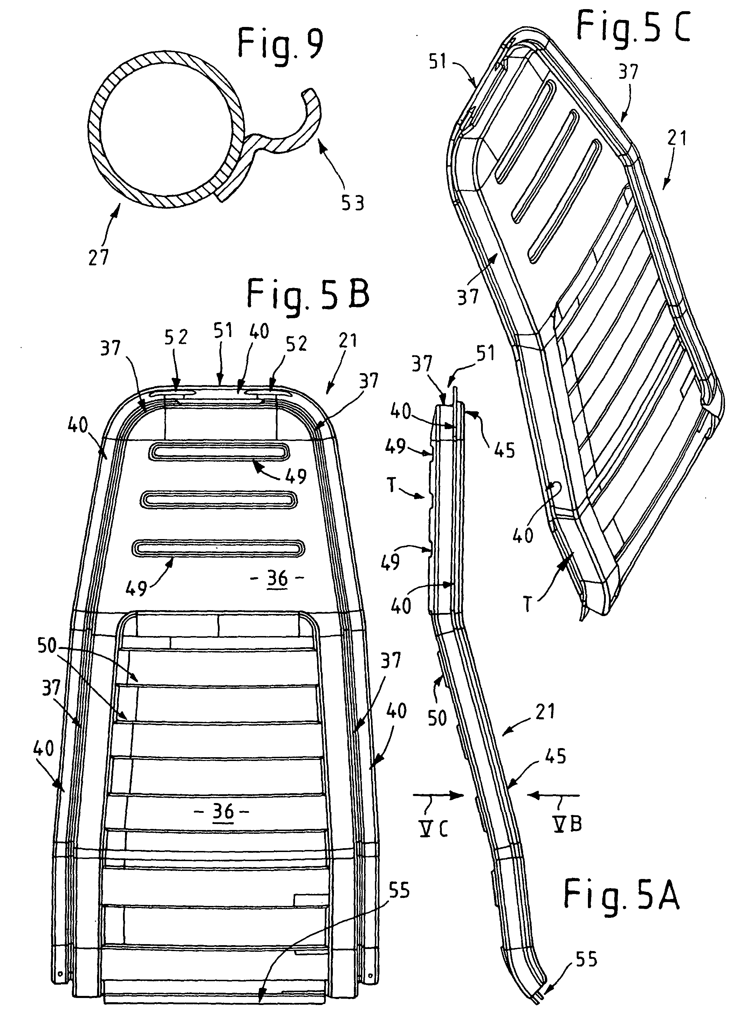

Aus den Fig. 5A-5B ist insbesondere zu ersehen, dass der Trogboden 36 mit unterschiedlich geformten Sicken 49, 50 profiliert ist.

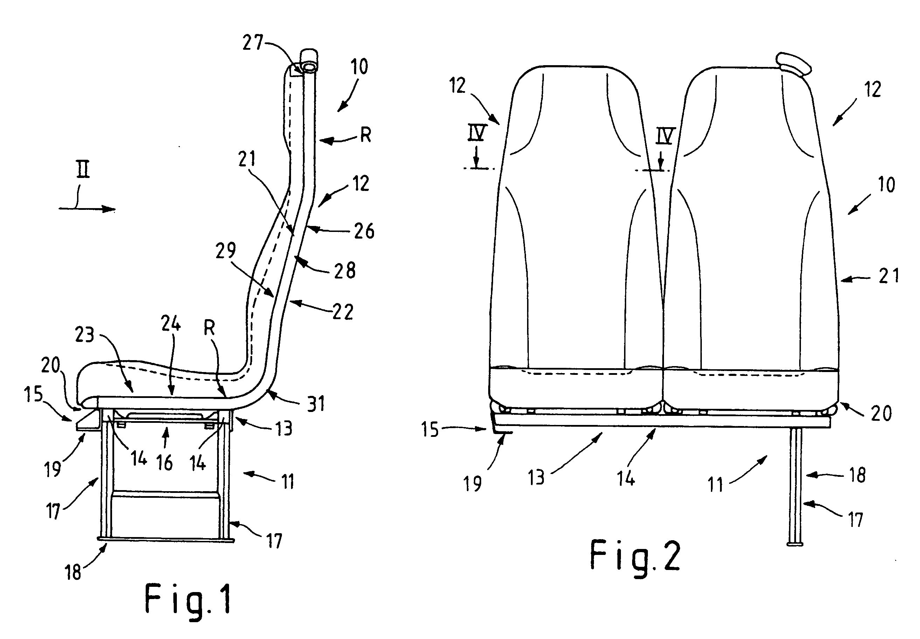

Im Bereich des Bügelsteges 27 (vgl. Fig. 1 und 3) sind die insbesondere rechts und links in Fig. 5B erkennbaren Trogwände 37 unter Einbeziehung der Hohlrippe 45 an der Stelle 51 um den Bügelsteg 27 herum zusammengeführt. Es ist also ein U-förmig umlaufendes Profil vorhanden, mit welchem der Trog T in den vom Lehnenrahmen 26 umgebenen Innenraum eingefügt ist. Zugleich ist ein U-förmig umlaufender Stützflansch 40 ausgebildet, welcher sich auf der gesamten Vorderseite des Lehnenrahmens 26 abstützt.

Die das Lehnenpolster 34 tragende Rückenschale 21 ist in ihrem den Bügelsteg 27 übergreifenden Flanschbereich 40 mit zwei Stecköffnungen 52 versehen, welche jeweils von einem in Fig. 9 dargestellten, nach oben offenen Haken 53 eingehängt sind, der jeweils an den Bügelsteg 27 angeschweißt ist.

Nachdem die das Lehnenpolster 34 tragende Rückenschale 21 oben an zwei Haken 53 aufgehängt ist und sich unten an die Bereiche 29 der Lehnenschenkel 28 anlehnt, wird die Sitzschale 20 von oben her auf den Sitzrahmen 23 aufgesetzt, wobei die Stützflansche 49 oben auf die Sitzschenkel 24 aufsetzen. Sodann wird die Sitzschale 20 so weit in Richtung Rückenschale 21 verschoben, bis ein Randbereich 54 der Sitzschale 20 in eine unten an der Rückenschale 21 vorgesehene Rinne 55 formschlüssig eingreift. Sodann genügt es, die Sitzschale 20 mittels ihrer Schrauböffnungen 56 mit dem vorderen Vierkantrohr-Träger 14 (s. Fig. 3) zu verschrauben. Der Randbereich 54 der Sitzschale 20 kann auch mit etwa steckzungenartigen Vorsprüngen 57 versehen sein.

## Patentansprüche

1. Fahrgastsitz (10) für ein Personenbeförderungsfahrzeug, mit einem fahrzeugseitig befestigbaren Unterbau (11) und mit mindestens einem auf dem Unterbau (11) gehaltenen, mit einer Polsterung (33, 34) versehenen Sitzteil (12), welches einen Sitzteilrahmen (22) besitzt, der einen Sitzrahmen (23) und einen U-bügelförmigen Lehnenrahmen (26) aufweist, von dessen Bügelsteg (27) zwei im Abstand voneinander angeordnete Lehnenschenkel (28) nach unten hin zum Sitzrahmen (23) weisen, welcher zwei im Abstand voneinander angeordnete und im wesentlichen mit den Lehnenschenkeln (28) ausgerichtete Sitzschenkel (24) aufweist, wobei zwischen den beiden Lehnenschenkeln (28) eine das Lehnenpolster (34) tragende Rückenschale (21) und zwischen den beiden Sitzschenkeln (24) eine das Sitzpolster (33) tragende Sitzschale (20) aufgenommen ist, wobei Ruckenschale (21) und Sitzschale (20) jeweils einen mit seiner Troghohlfläche (35) zur Polsterseite (P) hin offenen Trog (T) bilden, welcher von der Polsterseite (P) her in den Zwischenraum (Z) jeweils zwischen zwei korrespondierenden Schenkeln (24, 24; 28,28) eingreift, welcher sich mit den Außenflächen (38) seiner vom Trogboden (36) ausgehenden beiden Trogwände (37) an den beiden zueinander weisenden Innenseiten (39) zweier korrespondierender Schenkel (24, 24; 28, 28) seitlich abstützt und welcher von zwei sich außen an je eine Trogwand (37) anschließenden Stützflanschen (40) eingefasst ist, die sich mit ihren von der Polsterseite (P) abgewandten Flanschaußenflächen (41) jeweils auf einem Schenkel (24; 28) abstützen, und wobei jede Troghohlfläche (35) unter Einbeziehung ihrer beiden Flanschinnenflächen (47) die Polsterinnenfläche (48) des zugehörigen Polsters (33; 34) hintergreift, **dadurch gekennzeichnet, dass** Rückenschale (21) und/oder Sitzschale (20) im Übergang zwischen der jeweiligen Trogwand (37) und dem Stützflansch (40) eine zum Polster (33; 34) hin vorstehende Hohlrippe (45) aufweisen, die einen zum benachbarten Schenkel (24; 28) hin offenen Kanal (46) bildet.

2. Fahrgastsitz nach Anspruch 1, **dadurch gekennzeichnet, dass** der von der Hohlrippe (45) gebildete Kanal (46) der Aufnahme eines Bezugstoffrandes (43) dient.

3. Fahrgastsitz nach Anspruch 1 oder nach Anspruch 2, **dadurch gekennzeichnet, dass** die beiden Trogwände (37) sowie die beiden Stützflansche (40) der Rückenschale (21) - gegebenenfalls unter Einbeziehung der beiden Hohlrippen (45) - um den Bügelsteg (27) des Lehnenrahmens (26) herum zusammengeführt sind.

4. Fahrgastsitz nach einem der Ansprüche 1 bis 3, **dadurch gekennzeichnet, dass** der dem Bügelsteg (27) benachbarte Stützflansch (40) der Rückenschale (21) über Steckverbindungsmittel (52, 53) am Bügelsteg (27) aufgehängt ist.

5. Fahrgastsitz nach Anspruch 4, **dadurch gekennzeichnet, dass** zur Bildung der Steckverbindungsmittel (52, 53) der Bügelsteg (27) mit mindestens einem von letzterem weg nach oben gekrümmten Haken (53) und der dem Bügelsteg (27) benachbarte Stützflansch (40) der Rückenschale (21) jeweils mit einer korrespondierenden Stecköffnung (52) versehen ist.

6. Fahrgastsitz nach einem der Ansprüche 1 bis 5, **dadurch gekennzeichnet, dass** der zur Rückenschale (21) weisende innere stirnseitige Bereich (54) der Sitzschale (20) und der nach unten zur Sitzschale (20) hin weisende untere stirnseitige Bereich (55) der Rückenschale (21) zur gegenseitigen Halterung formschlüssig ineinandergreifen.

7. Fahrgastsitz nach einem der Ansprüche 1 bis 6, **dadurch gekennzeichnet, dass** Lehnenschenkel (28) und Sitzschenkel (24) von mindestens einem Rohr (R) gebildet sind.

8. Fahrgastsitz nach Anspruch 7, **dadurch gekennzeichnet, dass** das Rohr (R) ein Kreisprofilrohr ist.

9. Fahrgastsitz nach Anspruch 7 oder nach Anspruch 8, **dadurch gekennzeichnet, dass** der den Lehnenrahmen (26) und den Sitzrahmen (23) aufweisende Sitzteilrahmen (22) zusammenhängend aus einem Rohr (R) hergestellt ist.

## Claims

1. Passenger seat (10) for a passenger-transport vehicle, said seat having a substructure (11) which can be fastened to the vehicle and having at least one seat part (12) which is supported on said structure (11) and provided with upholstery (33, 34) and which possesses a frame (22) of the seat part which has a seat frame (23) and a U-bow-shaped backrest frame (26), from the curved cross-piece (27) of which two sidepieces (28) of the backrest, which are disposed at a distance from one another, extend downwards towards the seat frame (23) which has two sidepieces (24) of the seat which are disposed at a distance from one another and are substantially aligned with the sidepieces (28) of the backrest; wherein a back shell (21) carrying the backrest cushion (34) is received between the two sidepieces (28) of the backrest and a seat shell (20) carrying the seat cushion (33) is received between the two sidepieces (24) of the seat; and wherein the back shell (21) and seat shell (20) each form a trough (T) which is open, by means of its hollow face (35), towards the cushion side (P) and engages, from said cushion side (P), in the intervening space (Z) between each pair of corresponding sidepieces (24, 24; 28, 28); which is supported laterally, by means of the outer faces (38) of its two walls (37) that emanate from the bottom (36) of said trough, against the two inner sides (39), which point towards one another, of two corresponding sidepieces (24, 24; 28, 28); and which is bordered by two supporting flanges (40) which each adjoin a wall (37) of the trough on the outside and are each supported, by means of their flanged outer faces (41) which face away from the cushion side (P), on a sidepiece (24; 28); and wherein each hollow face (35) of the trough engages, with the inclusion of its two flanged inner faces (47), behind the inner face (48) of the appertaining cushion (33; 34),
**characterised in that** the back shell (21) and/or seat shell (20) have, in the transition between the particular wall (37) of the trough and the supporting flange (40), a hollow rib (45) which protrudes towards the cushion (33; 34) and forms a channel (46) which is open towards the adjacent sidepiece (24; 28).

2. Passenger seat according to claim 1,
**characterised in that** the channel (46) formed by the hollow rib (45) serves to receive an edge (43) of the upholstery cloth.

3. Passenger seat according to claim 1 or 2,
**characterised in that** the two walls (37) of the trough and also the two supporting flanges (40) of the back shell (21) are brought together - optionally with the inclusion of the hollow ribs 45 - around the curved cross-piece (27) of the backrest frame (26).

4. Passenger seat according to one of claims 1 to 3,
**characterised in that that** supporting flange (40) of the back shell (21) which is adjacent to the curved cross-piece (27) is suspended from said curved cross-piece (27) via plug-in connecting means (52, 53).

5. Passenger seat according to claim 4,
**characterised in that**, for the purpose of forming the plug-in connecting means (52, 53), the curved cross-piece (27) is provided with at least one hook (53), which is curved upwards, away from the latter, and that supporting flange (40) of the back shell (21) which is adjacent to the curved cross-piece (27) is provided, in each case, with a corresponding plug-in aperture (52).

6. Passenger seat according to one of claims 1 to 5,
**characterised in that that** inner end-face region (54) of the seat shell (20) which points towards the back shell (21) and that lower end-face region (55) of the back shell (21) which points downwards towards said seat shell (20) engage in one another in a form-locking manner for the purpose of securing them to one another.

7. Passenger seat according to one of claims 1 to 6,
**characterised in that** the sidepieces (28) of the backrest and the sidepieces (24) of the seat are formed by at least one tube (R).

8. Passenger seat according to claim 7,
**characterised in that** the tube (R) is a circular-profile tube.

9. Passenger seat according to claim 7 or 8,
**characterised in that that** frame (22) of the seat part which has the backrest frame (26) and the seat frame (23) is produced in a continuous manner from one tube (R).

## Revendications

1. Siège de passager (10) pour un véhicule de transport en commun, avec une sub-structure (11), susceptible d'être fixée côté véhicule, et avec une partie d'assise (12) munie d'au moins un rembourrage (33,34), maintenue sur la sub-structure (11), la partie d'assise comprenant un cadre de partie d'assise (22) présentant un cadre d'assise (23) et un cadre de dossier (26) en forme d'étrier en U, de l'âme d'étrier 27 duquel deux branches de dossier (28), disposées à distance l'une de l'autre, sont tournées vers le bas vers le cadre d'assise (23), qui présente deux branches d'assise (24), disposées à une distance l'une de l'autre et orientées sensiblement comme les branches de dossier (28), sachant que, entre les deux branches de dossier (28), est logé une coque de dossier (21) portant le coussin de dossier (34) et, entre les deux branches d'assise (24), est logée une coque d'assise (20) portant le coussin d'assise (33), sachant que la coque de dossier (21) et la coque d'assise (20) forment chacune une auge (T), ouverte vers la face de coussin (P) par sa face creuse d'auge (35), l'auge s'engageant, depuis la face de coussin (P), dans l'espace intermédiaire (Z) se trouvant chaque fois entre deux branches (24,24;28,28) correspondantes, en prenant appui latéralement, par les faces extérieures (38) de ses deux parois d'auge (37) partant du fond d'auge (36), sur les deux faces intérieures (39), tournées l'une vers l'autre, de deux branches (24,24;28,28) correspondantes, et l'auge étant enchâssée, par deux rebords d'appui (40), se raccordant chacune extérieurement à une paroi d'auge (37), les rebords prenant appui, par leurs faces extérieures de rebord (41) opposées à la face de coussin (P), chacune sur une branche (24;28), et chaque face creuse d'auge (35) saisissant par l'arrière en impliquant ses deux faces intérieures de rebord (47), la face intérieure de coussin (48) du coussin (33;34) afférent,
**caractérisé en ce que** la coque de dossier (21) et/ou la coque d'assise (20) présente(nt), à la transition entre la paroi d'auge (37) respective et le rebord d'appui (40), une nervure creuse (45), en saillie vers le coussin (33;34) et formant un canal (46) ouvert en direction de la branche (24;28) voisine.

2. Siège de passager selon la revendication 1, **caractérisé en ce que** le canal (46), formé par la nervure creuse (45), sert au logement d'un bord de tissu de revêtement (43).

3. Siège de passager selon la revendication 1 ou selon la revendication 2, **caractérisé en ce que** les deux parois d'auge (37), ainsi que les deux rebords d'appui (40) de la coque de dossier (21), sont réunies - le cas échéant en impliquant les deux nervures creuses (45) - autour de l'âme d'étrier (27) du cadre de dossier (25).

4. Siège de passager selon l'une des revendications 1 à 3, **caractérisé en ce que** le rebord d'appui (40), voisin de l'âme d'étrier (27), de la coque de dossier (21) est suspendue à l'âme d'étrier (27) par des moyens de liaison à enfichage (52,53).

5. Siège de passager selon la revendication 4, **caractérisé en ce que**, pour former les moyens de liaison par enfichage (52,53), d'une part, l'âme d'étrier (27) est munie d'au moins un crochet (53) courbé vers le haut en s'écartant de cette dernière, et, d'autre part, le rebord d'appui (40), voisin de l'âme d'étrier (27), de la coque de dossier (21) est muni d'une ouverture d'enfichage (52) correspondante.

6. Siège de passager selon l'une des revendications 1 à 5, **caractérisé en ce que** la zone (54) frontale intérieure, tournée vers la coque de dossier (21), de la coque d'assise (20) et la zone (55) frontale inférieure, tournée vers le bas vers la coque d'assise (20), de la coque de dossier (21) s'engagent l'une dans l'autre avec liaison à ajustement de forme, pour produire une fixation mutuelle.

7. Siège de passager selon l'une des revendications 1 à 6, **caractérisé en ce que** des branches de dossier (28) et des branches d'assise (24) sont formées par au moins un tube (R).

8. Siège de passager selon la revendication 7, **caractérisé en ce que** le tube (R) est un tube profilé circulaire.

9. Siège de passager selon la revendication 7 ou selon la revendication 8, **caractérisé en ce que** le cadre de partie d'assise (22), présentant le cadre de dossier (26) et le cadre d'assise (23), est fabriqué en étant attaché à partir d'un tube (R).
